# EUROPÄISCHE PATENTSCHRIFT

(11) **EP 1 436 155 B1**
(45) Veröffentlichungstag und Bekanntmachung des Hinweises auf die Patenterteilung: **26.10.2005**
(21) Anmeldenummer: 02801286.2
(22) Anmeldetag: 24.08.2002
(51) Int. Cl.: B60C 23/20, B60K 31/00

(54) **VERFAHREN ZUR GEWÄHRLEISTUNG EINES SICHEREN REIFENNOTLAUFBETRIEBS BEI EINEM KRAFTFAHRZEUG**
METHOD FOR GUARANTEEING RELIABILITY OF EMERGENCY OPERATING CONDITIONS OF A MOTOR VEHICLE TYRES
PROCEDE PERMETTANT DE GARANTIR LA FIABILITE DU FONCTIONNEMENT DE SECOURS DES PNEUS D'UN VEHICULE AUTOMOBILE

(30) Priorität: 11.10.2001 DE 10150384
(43) Veröffentlichungstag der Anmeldung: 14.07.2004
(73) Patentinhaber: DaimlerChrysler AG, 70567 Stuttgart (DE)
(72) Erfinder: BAADER, Dirk, 69502 Hemsbach (DE); GAUS, Hermann, 70619 Stuttgart (DE); RUNTSCH, Gerd, 71686 Remseck (DE); WEISSINGER, Jürgen, 73266 Bissingen (DE)
(86) Internationale Anmeldenummer: PCT/EP2002/009495
(87) Internationale Veröffentlichungsnummer: WO 2003/033284

(56) Entgegenhaltungen:
- EP-A- 0 221 522
- WO-A-00/59742
- WO-A-01/17806
- DE-A- 4 405 093
- DE-A- 10 036 580
- DE-A- 19 823 646
- US-B1- 6 259 361

## Beschreibung

Die Erfindung betrifft ein Verfahren zur Gewährleistung eines sicheren Reifennotlaufbetriebs.

Ein Notlaufreifen bei einem Kraftfahrzeug ermöglicht bei einem Druckverlust im Reifen eine Weiterfahrt des Fahrzeugs ohne eine sofortige Reparatur- oder Pannenhilfemaßnahme, da die Laufeigenschaften eines Notlaufreifen auch ohne Luftbefüllung des Reifens zumindest teilweise erhalten bleiben. So ist es möglich mit Notlaufreifen im Notlaufbetrieb, bei dem der Reifen keine reguläre Luftbefüllung oder sogar überhaupt keinen Reifeninnendruck mehr aufweist noch eine sogenannte Restlaufstrecke bis zum Versagen des Reifens zurückzulegen. Diese Restlaufstrecke kann mehrere hundert Kilometer betragen. Sowohl ein langsamer Druckverlust aufgrund eines Reifendefekts als auch ein plötzlich auftretender Druckverlust aufgrund einer äußeren mechanischen Einwirkung oder einer Verschleißwirkung werden vom Fahrer des Kraftfahrzeugs möglicherweise nicht bemerkt, da das Fahrverhalten des Notlaufreifens sich insbesondere bei Geradeausfahrt oder kleinen Querbeschleunigungen nicht wesentlich verändert. Das Verschleißverhalten des Notlaufreifens ist im Notlaufbetrieb jedoch stark verändert, besonders kann es zu einer Überhitzung des Reifens aufgrund der erhöhten Walkarbeit und damit zu einem thermisch verschleißbedingten Totalausfall des Reifens kommen. Zudem kann es bei schnellen Kurvenfahrten, wie sie beispielsweise an Autobahnausfahrten häufig auftreten und bei welchen eine hohe Querbeschleunigung auf das Fahrzeug wirkt, zu einem Haftungsverlust oder einer Reifenüberbeanspruchung kommen. Um dem vorzubeugen, wird bei Notlaufreifen der Reifendruck ermittelt, und bei einem ungewöhnlichen Druckverlust oder einem zu geringen Reifendruck wird ein Warnhinweis an den Fahrer ausgegeben, welche diesen über den Reifennotlaufbetrieb informiert.

In der DE 19908701 A1 ist beispielsweise erwähnt, einen Notlaufzustand eines Reifens mit Messmitteln zu erfassen und über optische und akustische Warneinrichtungen dem Fahrer zur Kenntnis zu bringen.

Darüber hinaus ist aus der DE 10050197 A1 bekannt, bei einem Reifennotlaufbetrieb zusätzlich zu einer Warnmeldung an den Fahrer die Restlaufstrecke für den defekten Reifen zu ermitteln und anzuzeigen. EP 221522 A offenbart ein Verfahren, wobei bei Reifendruckverlust die Fahrgeschwindigkeit des Fahrzeugs begrenzt wird.

Ausgehend von diesem Stand der Technik liegt der Erfindung die Aufgabe zugrunde die Sicherheit beim Betrieb eines Kraftfahrzeugs mit Notlaufreifen zu erhöhen.

Diese Aufgabe wird durch die Merkmale des Anspruchs 1 gelöst.

Vorteilhafte Ausgestaltungen und Weiterbildungen sind in den Unteransprüchen angegeben.

Die Erfindung geht aus von einem Verfahren zur Gewährleistung eines sicheren Reifennotlaufbetriebs bei einem Kraftfahrzeug mit Notlaufreifen, bei welchem der Fahrer hinsichtlich eines Reifennotlaufzustands gewarnt wird. Das Kraftfahrzeug umfasst eine Notlaufermittlungsvorrichtung, welche einen Reifennotlaufbetrieb, d.h. eine Fahrt des Kraftfahrzeugs mit einem defekten Reifen und/oder einem starken Reifenminderdruck ermittelt. Erfindungsgemäß wird nun alternativ oder ergänzend zu dieser Warnung von einer Fahrgeschwindigkeitsbegrenzungsvorrichtung bei festgestelltem Reifennotlaufbetrieb die maximal mögliche Fahrgeschwindigkeit des Kraftfahrzeugs begrenzt. Dadurch wird zuverlässig verhindert, dass ein Reifennotlaufbetrieb bei einem Kraftfahrzeug zu einem durch Überhitzen oder übermäßigen Verschleiß bedingten Totalausfall des vom Notlaufbetrieb betroffenen Reifens führt.

In einer Weiterbildung des Verfahrens zur Gewährleistung eines sicheren Reifennotlaufbetriebs bei einem Kraftfahrzeug mit Notlaufreifen wird von der Fahrgeschwindigkeitsbegrenzungsvorrichtung die maximal mögliche Fahrgeschwindigkeit des Kraftfahrzeugs begrenzt, wenn außer einem festgestellten Reifennotlaufbetrieb mindestens eine weitere vorgebbare Bedingung erfüllt ist. Mit dieser Weiterbildung des Verfahrens wird auch zuverlässig verhindert, dass ein Reifennotlaufbetrieb bei einem Kraftfahrzeug zu einer Reifenpanne an dem vom Notlaufbetrieb betroffenen Reifen führt. Zusätzlich kann mittels der weiteren Bedingung sichergestellt werden, dass durch die Geschwindigkeitsbegrenzung der Komfort nicht unangemessen reduziert und insbesondere die Sicherheit nicht eingeschränkt wird. Als weitere Bedingung kann beispielsweise die aktuelle Fahrgeschwindigkeit, der Lenkwinkel oder die Gaspedalstellung herangezogen werden, so dass mit der weiteren Bedingung verhindert werden kann, dass das Kraftfahrzeug beim Auftreten eines Reifennotlaufbetriebs plötzlich und für den Fahrer unerwartet abgebremst wird.

In einer Ausgestaltung des erfindungsgemäßen Verfahrens wird demzufolge die Fahrgeschwindigkeit des Kraftfahrzeugs erfasst und als vorgebbare Bedingung ein Fahrgeschwindigkeitsschwellwert vorgegeben, wobei die Fahrgeschwindigkeit dann auf einen vorgebbaren Begrenzungswert begrenzt wird, wenn die erfasste Fahrgeschwindigkeit den Fahrgeschwindigkeitsschwellwert unterschreitet. Hierdurch wird verhindert, dass ein Fahrzeug, welches eine hohe Fahrgeschwindigkeit aufweist, aufgrund eines auftretenden Reifennotlaufs unerwünscht abgebremst wird, was beispielsweise bei einem bereits begonnenen Überholvorgang sicherheitskritisch wäre.

In einer weiteren Ausgestaltung des Verfahrens ist der Fahrgeschwindigkeitsschwellwert, welcher unterschritten sein muss, um die Fahrgeschwindigkeit zu begrenzen gleich dem Begrenzungswert auf den die Fahrgeschwindigkeit begrenzt wird. Dies führt dazu, dass ein Fahrzeug von der Fahrgeschwindigkeitsbegrenzungsvorrichtung überhaupt nicht abgebremst wird, sondern lediglich dann, wenn es eine Geschwindigkeit unterhalb des Begrenzungswerts aufweist, wird das Fahrzeug daran gehindert wieder auf eine über dem Begrenzungswert liegende Fahrgeschwindigkeit zu beschleunigen.

In einer anderen Ausgestaltung des Verfahrens wird eine Reifentemperatur erfasst und als vorgebbare Bedingung ein Reifentemperaturschwellwert und/oder ein Schwellwert für eine zeitliche Reifentemperaturänderung vorgegeben. Die Fahrgeschwindigkeit wird erst dann auf einen vorgebbaren Begrenzungswert begrenzt, wenn die erfasste Reifentemperatur über dem Reifentemperaturschwellwert oder die ermittelte zeitliche Reifentemperaturänderung über dem Reifentemperaturänderungsschwellwert liegt. Diese Ausgestaltung erhöht den Fahrkomfort bei der Fahrt in einem Kraftfahrzeug bei einem Reifennotlaufbetrieb, da die Fahrgeschwindigkeit nur dann begrenzt wird, wenn eine Gefährdung der Fahrsicherheit durch erhöhte Reifentemperatur oder eine schnelle Erhöhung der Reifentemperatur vorliegt.

In einer weiteren Ausgestaltung wird die Fahrgeschwindigkeit dann auf einen vorgebbaren Begrenzungswert begrenzt, wenn die erfasste Reifentemperatur mindestens für eine vorgebbare Zeitdauer über dem Reifentemperaturschwellwert oder die zeitliche Reifentemperaturänderung für eine vorgebbare Zeitdauer über dem Reifentemperaturänderungsschwellwert liegt. Hierdurch werden kurzzeitige Temperaturschwankungen oder Schwankungen der Temperaturänderung, welche auch durch Messfehler begründet sein können auf eine einfache Weise eliminiert.

In einer Weiterbildung des Verfahrens wird die maximal mögliche Fahrgeschwindigkeit in Abhängigkeit der Reifentemperatur und der zeitlichen Reifentemperaturänderungen festgelegt, wobei tabellarisch mehrere Fahrgeschwindigkeitswerte entsprechenden Reifentemperaturwerten zugeordnet sind oder ein funktionaler Zusammenhang zwischen Reifentemperatur und maximal möglicher Fahrgeschwindigkeit vorgegeben wird. Insbesondere wird oberhalb einer erfassten Reifentemperatur und/oder einer ermittelten zeitlichen Reifentemperaturänderung eine aufgrund des erfindungsgemäßen Verfahrens vorgegebene maximale Fahrgeschwindigkeit von beispielsweise 80 km/h weiter reduziert auf beispielsweise 50 km/h und/oder es wird eine weitere Warnmeldung an den Fahrer ausgegeben, welche ihn auf die erhöhte Reifentemperatur oder den erhöhten Reifentemperaturanstieg hinweist.

In einer alternativen oder ergänzenden Ausgestaltung des Verfahrens wird ein Gaspedalwegschwellwert vorgegeben und die Begrenzung der Fahrgeschwindigkeit für einen vorgebbaren Zeitraum unterbrochen, falls das Gaspedal mindestens um den Pedalwegschwellwert durchgedrückt wird. Als Gaspedalwegschwellwert kann beispielsweise die Vollgasstellung (Kick-Down) vorgegeben werden. Wird der Gaspedalschwellwert erreicht oder überschritten, so wird die Begrenzung der Fahrgeschwindigkeit für einen vorgebbaren Zeitraum aufgehoben und das Fahrzeug kann wie im Normalfahrbetrieb ohne Reifennotlauf betrieben werden. Alternativ zu einem Aufheben der Fahrgeschwindigkeitsbegrenzung kann auch auf einen zweiten, höheren Wert für die Fahrgeschwindigkeitsbegrenzung umgeschaltet werden. Beispielsweise ist ein Beschleunigen des Fahrzeugs auf einen zweiten Ersatzbegrenzungswert der Fahrgeschwindigkeit möglich, falls der Fahrer das Gaspedal vollständig durchdrückt. Dies kann beispielsweise nötig sein, um bei einer verkehrsbedingten Gefahrensituation ungefährdet die Spur wechseln oder aus einer andersartigen Gefahrensituation, beispielsweise bei einem Anschlag möglichst schnell entkommen zu können.

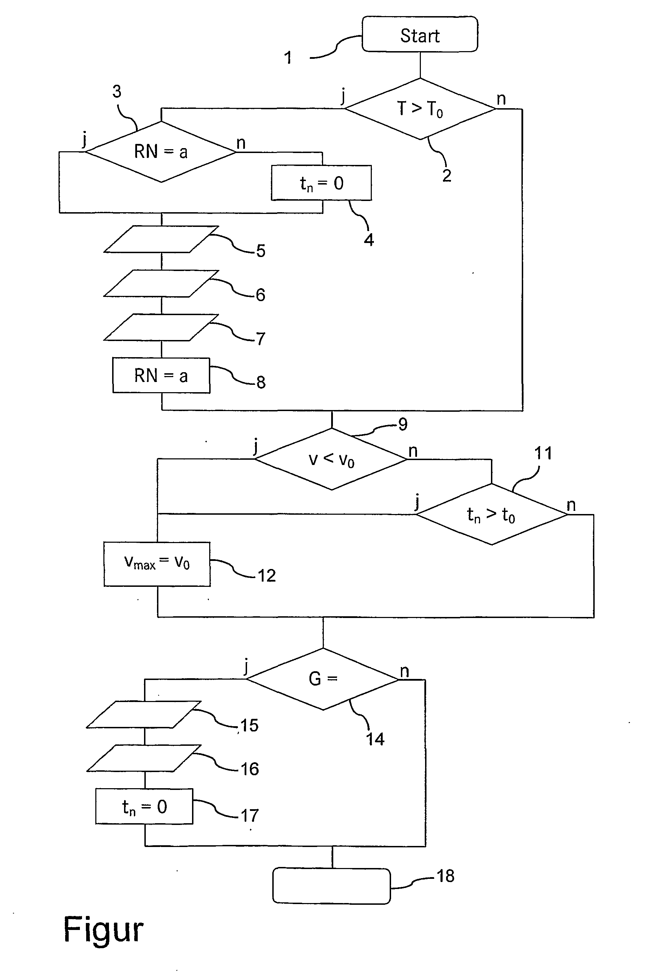

Nachfolgend ist ein Ausführungsbeispiel der Erfindung anhand der Zeichnung näher erläutert.

Die einzige Figur zeigt ein Flussdiagramm einer vorteilhaften Ausführungsform des Verfahrens zur Gewährleistung eines sicheren Reifennotlaufbetriebs bei einem Kraftfahrzeug mit Notlaufreifen.

Um einen Reifennotlauf zu ermitteln, kann beispielsweise der Reifendruck überwacht werden. Sinkt der Reifendruck unter einen vorgebbaren Schwellwert oder verringert sich der Reifendruck innerhalb eines vorgebbaren Zeitraums um einen vorgebbaren Wert, so wird darauf geschlossen, dass ein Reifennotlauf vorliegt.

Sobald ein Reifennotlauf ermittelt wird, wird das Verfahren in Schritt 1 gestartet. Anschließend wird in Schritt 2 überprüft, ob die Reifentemperatur T des Reifens im Notlaufbetrieb einen Temperaturschwellwert T₀ überschreitet, und falls dies zutrifft, zu Schritt 3 verzweigt. In Schritt 3 wird geprüft, ob die Reifennotlaufvariable RN bereits auf aktiv gesetzt wurde. Steht die Reifennotlaufvariable RN auf aktiv, so wird zu Schritt 5 verzweigt, steht sie auf inaktiv wird erst zu Schritt 4 verzweigt, in welchem eine Zeitvariable tₙ auf Null gesetzt wird. In Schritt 5 wird ein Reifennotlaufsignal abgesetzt, welches beispielsweise auf einem Datenbus bereit gestellt wird und in Schritt 6 zu einer Fahrerwarnung führt, welche mittels einer optischen Anzeigeeinrichtung ausgegeben wird. Der Fahrer wird hierdurch darauf hingewiesen eine vorgebbare Höchstgeschwindigkeit von beispielsweise 80 km/h nicht zu überschreiten. Ergänzend oder alternativ wird in Schritt 7 ein weiterer Hinweis ausgegeben, welcher auf den Defekt eines Reifens und den Ort des defekten Reifens hinweist. Die Hinweise in den Schritten 6 und 7 können alternativ oder ergänzend auch akustisch erfolgen oder durch einen akustischen Zusatzhinweis ergänzt werden. In Schritt 8 wird die Reifennotlaufvariable RN auf aktiv gesetzt und anschließend mit Schritt 9 fortgefahren.

In Schritt 9 wird überprüft, ob sich die tatsächliche Fahrgeschwindigkeit v unterhalb einer Grenzgeschwindigkeit v₀ befindet, und zu Schritt 12 verzweigt, wenn dies der Fall ist. Ist die tatsächliche Fahrgeschwindigkeit v größer als der Fahrgeschwindigkeitsgrenzwert v₀, so wird in Schritt 11 überprüft ob die Zeitvariable tₙ größer als ein vorgebbarer Zeitwert t₀ (z. B. 120 Sekunden) ist. Ist diese Bedingung erfüllt wird ebenfalls zu Schritt 12 verzweigt, andernfalls wird mit Schritt 14 fortgefahren. In Schritt 12 wird die Geschwindigkeitsbegrenzungsvorrichtung aktiviert und die maximal mögliche Fahrgeschwindigkeit vₘₐₓ wird gleich dem Geschwindigkeitsbegrenzungswert v₀ gesetzt.

In Schritt 14 wird überprüft, ob die Gaspedalstellung G einen vorgebbaren Wert G = max (z.B. Kick-Down) annimmt oder eine vorgebbare Schwelle G₀ überschreitet. Bei Erfüllen dieser Bedingung wird mit Schritt 15 fortgefahren, in welchem die Variable RN auf inaktiv gesetzt, und die Fahrgeschwindigkeitsbegrenzung aufgehoben wird. In Schritt 16 wird die Reifennotlaufinformation aufgehoben, und/oder es wird dem Fahrer angezeigt, dass der Reifennotlaufbetrieb des Fahrzeugs aufgehoben oder unterbrochen wurde. In Schritt 17 wird die Zeitvariable tₙ auf Null zurückgesetzt.

In Schritt 18 endet ein Durchlauf des Verfahrens, und es wird vorzugsweise wieder nach einem der Schritte 1 oder 2 zurückgesprungen, wobei das Verfahren erneut durchlaufen wird, solange ein Reifennotlaufbetrieb beziehungsweise eine Fahrt mit wesentlichen Reifenunterdruck vorliegt.

Ergänzend oder alternativ zu einer Fahrgeschwindigkeitsbegrenzung kann das erfindungsgemäße Verfahren auch mit einer Beschleunigungsbegrenzung durchgeführt werden. Das bedeutet, dass beispielsweise in Schritt 12 anstelle eines Geschwindigkeitsgrenzwertes vₒ ein Beschleunigungsgrenzwert a₀ (z. B. 0,4 g) vorgegeben wird, welcher dazu führt dass das Fahrzeug mit maximal diesem Beschleunigungsgrenzwert durch den Antriebsstrang des Fahrzeugs beschleunigt wird. Dieser Beschleunigungsgrenzwert kann für eine Brems- oder Querbeschleunigung anders gewählt werden oder vorzugsweise entfallen, um die maximale Lenk- und Bremswirkung zu gewährleisten.

## Patentansprüche

1. Verfahren zur Gewährleistung eines sicheren Reifennotlaufbetriebs bei einem Kraftfahrzeug
- mit Notlaufreifen, welche bei einem stark verminderten oder fehlenden Reifendruck Notlaufeigenschaften aufweisen, und
- einer Notlaufermittlungsvorrichtung, welche einen Reifennotlaufbetrieb des Kraftfahrzeugs ermittelt, wobei
bei einem ermittelten Reifennotlaufbetrieb die Fahrgeschwindigkeit des Kraftfahrzeugs begrenzt wird, und
die maximal mögliche Fahrgeschwindigkeit in Abhängigkeit der Reifentemperatur festgelegt wird.

2. Verfahren nach Anspruch 1,
**dadurch gekennzeichnet,**
**dass** eine Fahrgeschwindigkeit erfasst und als vorgebbare Bedingung ein Fahrgeschwindigkeitsschwellwert vorgegeben wird, wobei die Fahrgeschwindigkeit dann auf einen vorgebbaren Begrenzungswert begrenzt wird, wenn die erfasste Fahrgeschwindigkeit den Fahrgeschwindigkeitsschwellwert unterschreitet.

3. Verfahren nach Anspruch 2,
**dadurch gekennzeichnet,**
**dass** der Fahrgeschwindigkeitsschwellwert gleich dem Begrenzungswert ist.

4. Verfahren nach einem der Ansprüche 1 bis 3,
**dadurch gekennzeichnet,**
**dass** ein Reifentemperaturschwellwert vorgegeben wird, wobei die Fahrgeschwindigkeit dann auf einen vorgebbaren Begrenzungswert begrenzt wird, wenn die erfasste Reifentemperatur über dem Reifentemperaturschwellwert liegt.

5. Verfahren nach Anspruch 4,
**dadurch gekennzeichnet,**
**dass** die Fahrgeschwindigkeit dann auf einen vorgebbaren Begrenzungswert begrenzt wird, wenn die erfasste Reifentemperatur mindestens für eine vorgebbare Zeitdauer über dem Reifentemperaturschwellwert liegt.

6. Verfahren nach einem der Ansprüche 1 bis 3,
**dadurch gekennzeichnet,**
**dass** eine zeitliche Reifentemperaturänderung ermittelt wird und ein Reifentemperaturänderungsschwellwert vorgegeben wird, wobei die Fahrgeschwindigkeit dann auf einen vorgebbaren Begrenzungswert begrenzt wird, wenn die ermittelte zeitliche Reifentemperaturänderung über dem Reifentemperaturänderungsschwellwert liegt.

7. Verfahren nach Anspruch 6,
**dadurch gekennzeichnet,**
**dass** die Fahrgeschwindigkeit dann auf einen vorgebbaren Begrenzungswert begrenzt wird, wenn die ermittelte zeitliche Reifentemperaturänderung mindestens für eine vorgebbare Zeitdauer über dem Reifentemperaturänderungsschwellwert liegt.

8. Verfahren nach einem der Ansprüche 1 bis 7,
**dadurch gekennzeichnet,**
**dass** ein Gaspedalwegschwellwert vorgegeben wird und die Begrenzung der Fahrgeschwindigkeit für einen vorgebbaren Zeitraum unterbrochen wird, wenn das Gaspedal um mehr als den Pedalwegschwellwert durchgedrückt wird.

9. Verfahren nach Anspruch 8,
**dadurch gekennzeichnet,**
**dass** als Gaspedalwegschwellwert die Vollgasstellung vorgegeben wird und die Begrenzung der Fahrgeschwindigkeit für einen vorgebbaren Zeitraum unterbrochen wird, wenn das Gaspedal in Vollgasstellung gebracht wird.

## Claims

1. Method of guaranteeing safe operation when a tyre is operating under emergency condition in a vehicle
- fitted with emergency tyres which have emergency running properties in the event of a sharply reduced or no tyre pressure, and
- an emergency detection system which detects when a tyre of the vehicle is operating under emergency conditions, whereby
if it is detected that a tyre is operating under emergency conditions, the driving speed of the motor vehicle is limited and
the maximum possible driving speed is fixed depending on the tyre temperature.

2. Method as claimed in claim 1,
**characterised in that**
a vehicle speed is detected and a vehicle speed threshold value is pre-set as a pre-settable condition, in which case the driving speed is limited to a pre-settable limit value whenever the detected driving speed falls below the driving speed threshold value.

3. Method as claimed in claim 2,
**characterised in that**
the driving speed threshold value is the same as the limit value.

4. Method as claimed in one of claims 1 to 3,
**characterised in that**
a tyre temperature threshold value is pre-set, in which case the driving speed is limited to a pre-settable limit value whenever the detected tyre temperature lies above the tyre temperature threshold value.

5. Method as claimed in claim 4,
**characterised in that**
the driving speed is limited to a pre-settable limit value whenever the detected tyre temperature lies above the tyre temperature threshold value for at least a pre-settable period of time.

6. Method as claimed in one of claims 1 to 3,
**characterised in that**
a time-correlated tyre temperature change is detected and a tyre temperature change threshold value is pre-set, in which case the driving speed is limited to a pre-settable limit value whenever the detected time-correlated tyre temperature change lies above the tyre temperature change threshold value.

7. Method as claimed in claim 6,
**characterised in that**
the driving speed is limited to a pre-settable limit value whenever the detected time-correlated tyre temperature change lies above the tyre temperature change threshold value at least for a pre-settable period of time.

8. Method as claimed in one of claims 1 to 7,
**characterised in that**
an accelerator pedal threshold value is pre-set and limitation of the driving speed is interrupted for a pre-settable period of time if the accelerator pedal is depressed by more than the pedal threshold value.

9. Method as claimed in claim 8,
**characterised in that**
the full throttle position is pre-set as the accelerator pedal threshold value and the limitation on the driving speed is interrupted for a pre-settable period of time if the accelerator pedal is depressed to the full throttle position.

## Revendications

1. Procédé pour garantir un fonctionnement d'urgence sûr des pneus dans un véhicule moteur :
- comportant des pneus d'urgence, lesquels présentent des caractéristiques d'urgence dans le cas d'une forte réduction ou d'une absence de pression des pneus et
- un dispositif de détection de cas d'urgence, lequel détecte un fonctionnement d'urgence des pneus du véhicule moteur,
la vitesse de marche du véhicule moteur étant limitée lors de la détection d'un fonctionnement d'urgence des pneus et
la vitesse de marche possible maximale étant fixée en fonction de la température des pneus.

2. Procédé selon la revendication 1, **caractérisé en ce qu'**une vitesse de marche est détectée et **en ce qu'**une valeur seuil de la vitesse de marche est prédéfinie en tant que condition déterminable, la vitesse de marche étant alors limitée à une valeur limite déterminable lorsque la vitesse de marche détectée est inférieure à la valeur seuil de la vitesse de marche.

3. Procédé selon la revendication 2, **caractérisé en ce que** la valeur seuil de la vitesse de marche est égale à la valeur limite.

4. Procédé selon l'une quelconque des revendications 1 à 3, **caractérisé en ce qu'**une valeur seuil de température de pneu est prédéfinie, la vitesse de marche étant alors limitée à une valeur limite déterminable lorsque la température de pneu détectée se situe au-dessus de la valeur seuil de température de pneu.

5. Procédé selon la revendication 4, **caractérisé en ce que** la vitesse de marche est alors limitée à une valeur limite déterminable lorsque la température de pneu détectée se situe au-dessus de la valeur seuil de température de pneu au moins pendant une durée déterminable.

6. Procédé selon l'une quelconque des revendications 1 à 3, **caractérisé en ce qu'**une modification temporelle de la température de pneu est détectée et **en ce qu'**une valeur seuil de modification de la température de pneu est prédéfinie, la vitesse de marche étant alors limitée à une valeur limite déterminable lorsque la modification temporelle détectée de la température de pneu se situe au-dessus de la valeur seuil de modification de la température de pneu.

7. Procédé selon la revendication 6, **caractérisé en ce que** la vitesse de marche est alors limitée à une valeur limite déterminable lorsque la modification temporelle détectée de la température de pneu se situe au-dessus de la valeur seuil de modification de la température de pneu au moins pendant une durée déterminable.

8. Procédé selon l'une quelconque des revendications 1 à 7, **caractérisé en ce qu'**une valeur seuil de débattement de l'accélérateur est prédéfinie et la limitation de la vitesse de marche est interrompue pour une durée déterminable lorsque l'accélérateur est pressé conformément à une valeur dépassant la valeur seuil de débattement de la pédale.

9. Procédé selon la revendication 8, **caractérisé en ce que** l'on détermine la position « plein régime » comme étant la valeur seuil de débattement de l'accélérateur et la limitation de la vitesse de marche est interrompue pour une durée déterminable lorsque l'accélérateur est amené dans la position « plein régime ».
